# EUROPEAN PATENT SPECIFICATION

(11) **EP 4 474 761 B1**
(45) Date of publication and mention of the grant of the patent: **03.06.2026**
(21) Application number: 24169569.1
(22) Date of filing: 11.04.2024
(51) Int. Cl.: G01B 5/02, G01B 3/04, B23K 7/00, B23K 37/053, G01B 3/56, G01B 5/00, G01B 5/25, G01B 11/27

(54) **APPARATUS FOR LOCATING HARDWARE ON A TUBULAR ELEMENT**
VORRICHTUNG ZUR LOKALISIERUNG VON HARDWARE AUF EINEM ROHRFÖRMIGEN ELEMENT
APPAREIL POUR LA LOCALISATION D'UNE PIÈCE SUR UN ÉLÉMENT TUBULAIRE

(30) Priority: 09.05.2023 IN 202311032695
(43) Date of publication of application: 11.12.2024
(73) Proprietor: Caterpillar, Inc., Peoria, IL 61629-6450 (US)
(72) Inventor: Sharma, Deepak, 600085 Chennai (IN); Brittain, Emilee R., Peoria Heights, 61616 (US); Nm, Harish, 600020 Chennai (IN)
(74) Representative: Novagraaf Group

(56) References cited:
- WO-A1-2014/059297
- US-A- 2 178 293
- US-A- 3 130 496
- US-B1- 7 178 252
- US-B1- 7 240 437

## Description

### Technical Field

The present disclosure relates to an apparatus for locating a hardware at a desired location on a tubular structure of a machine.

### Background

A machine, for example, a mining truck typically includes a frame that supports various components of the machine thereon. For example, the frame may support components, such as, a battery module, a control unit, and the like. Such components are mounted on the frame using one or more hardware. The hardware may include, for example, a boss, a bracket, a block, and the like that has to be coupled to the frame for mounting of the abovementioned components. Further, some frames are made of multiple tubular members and locating the hardware on such tubular members may be a challenging task due to continuous profile changes of the tubular members.

Conventional techniques of locating the hardware may involve usage of bulky locating tools and set-ups, and the techniques may be time consuming and costly. Further, it may be difficult to have access to the locating tools and set-ups at locations such as, mining sites, proving grounds, or test beds in order to locate, tack, and weld the hardware at an intended location. Accordingly, it may be challenging to locate the hardware at remote worksites during a replacement procedure, for example when one or more hardware fails, which may turn impact machine productivity.

Moreover, conventional locating tools may not be compatible with different types and dimensions of the hardware and/or a design of the locating tool may have to be revised as the intended location of the hardware changes, which may increase part numbers and costs associated with coupling of the hardware.

U.S. Patent Number 3,130,496 describes a measuring device comprising a first linear measuring element, a second linear measuring element slidably connected with and angularly adjustable relative to said first linear measuring element, angle measuring means mounted on and affixed in position relative to said first linear measuring element, and indicating means pivotally connected with said first linear measuring element, said second linear measuring device being interposed between said indicating means and said angle measuring means and having indicia thereon disposed to register with a first part of said indicating means and said indicating means being movable linearly but not angularly relative to said second linear measuring element and indicating particular linear relationship therebetween and said indicating means being angularly but not linearly movable relative to said angle measuring means and to said first linear measuring element and having a second part for indicating particular angular relationships therebetween. US 7 178 252 B1 discloses an aligning device for aligning two pipe portions to each other. The device has several geometries. In one geometry two similar elements having each a L-shape which joint together with each horizontal leg lying on respective portion of the pipe, while the vertical legs are joint together. In another example only one L-shaped element is used for joining a vertical portion of a pipe to a horizontal portion with the aid of a protractor assembly.

### Summary of the Disclosure

In an aspect of the present disclosure, an apparatus for locating a hardware at a desired location on a tubular structure of a machine is provided as claimed in claim 1. The apparatus includes a linear element extending along a longitudinal axis, and defining a first end and a second end. The linear element includes a plurality of linear reference indicia thereon. The apparatus also includes a slider coupled to the linear element. The linear element is linearly slidable relative to the slider along the longitudinal axis to dispose the slider at any one of the plurality of linear reference indicia based on the desired location of the hardware. The apparatus further includes an angular element adapted to be coupled with and at least partially surround the tubular structure. The slider is angularly slidable relative to the angular element. The angular element includes a plurality of angular reference indicia thereon. The slider is disposable at any one of the plurality of angular reference indicia based on the desired location of the hardware. The apparatus includes a hardware locator coupled to the linear element at the first end thereof. The hardware locator is adapted to engage with the hardware to locate the hardware at the desired location on the tubular structure. The apparatus also includes a reference hardware locator coupled to the angular element. The angular element is coupled to the tubular structure such that the reference hardware locator engages with a pre-existing hardware mounted on the tubular structure. The pre-existing hardware is used as a reference to locate the hardware at the desired location on the tubular structure.

In another aspect of the present disclosure, a system for locating a hardware at a desired location on a tubular structure of a machine is provided. The system includes a pre-existing hardware mounted on the tubular structure. The pre-existing hardware is used as a reference to locate the hardware at the desired location on the tubular structure. The system also includes an apparatus adapted to locate the hardware at the desired location on the tubular structure using the pre-existing hardware as the reference. The apparatus includes a linear element extending along a longitudinal axis, and defining a first end and a second end. The linear element includes a plurality of linear reference indicia thereon. The apparatus also includes a slider coupled to the linear element. The linear element is linearly slidable relative to the slider along the longitudinal axis to dispose the slider at any one of the plurality of linear reference indicia based on the desired location of the hardware. The apparatus further includes an angular element adapted to be coupled with and at least partially surround the tubular structure. The slider is angularly slidable relative to the angular element. The angular element includes a plurality of angular reference indicia thereon. The slider is disposable at any one of the plurality of angular reference indicia based on the desired location of the hardware. The apparatus includes a hardware locator coupled to the linear element at the first end thereof. The hardware locator is adapted to engage with the hardware to locate the hardware at the desired location on the tubular structure. The apparatus also includes a reference hardware locator coupled to the angular element. The angular element is coupled to the tubular structure such that the reference hardware locator engages with the pre-existing hardware mounted on the tubular structure.

Other features and aspects of this disclosure will be apparent from the following description and the accompanying drawings.

### Brief Description of the Drawings

FIG. 1 is a schematic side view of a mining truck, according to an example of the present disclosure;
FIG. 2 is a front perspective view of an apparatus for locating a hardware at a desired location on a tubular structure of the machine of FIG. 1, according to an example of the present disclosure;
FIG. 3 is a rear perspective view of the apparatus of FIG. 2;
FIG. 4 illustrates a portion of the apparatus of FIG. 2 wherein a reference hardware locator is in engagement with a pre-exiting hardware on the tubular structure;
FIG. 5 illustrates a cylindrical hardware located on the tubular structure using the apparatus of FIG. 2;
FIG. 6 is a front perspective view of an apparatus for locating another hardware, such as, a plate, a block, a bracket, etc. at the desired location on the tubular structure of the machine of FIG. 1, according to another example of the present disclosure; and
FIG. 7 illustrates the hardware located on the tubular structure using the apparatus of FIG. 6.

### Detailed Description

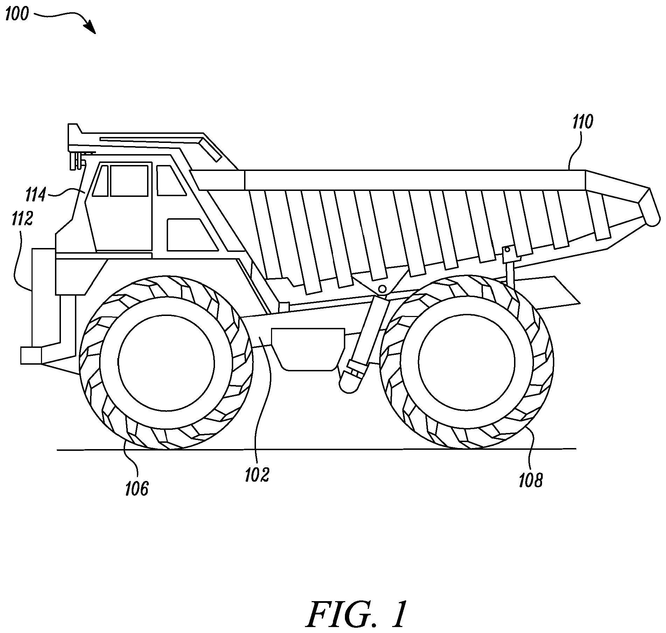

Wherever possible, the same reference numbers will be used throughout the drawings to refer to same or like parts. Referring to FIG. 1, a schematic side view of a machine 100 is illustrated. The machine 100 is embodied as a mining truck that may be used to move payload, such as, asphalt, debris, dirt, snow, feed, gravel, logs, raw minerals, recycled material, rock, sand, woodchips, etc. from one location to another. However, the machine 100 may include any other work/construction machine, such as, a hydraulic excavator, a dozer, a wheel loader, a track-type tractor, a motor grader, or any other machine that may be used for purposes, such as, digging, construction, landscaping, and the like. Alternatively, the machine 100 may include a passenger vehicle, such as, a car, a van, a bus, etc. that may be used for transportation of passengers from one location to another.

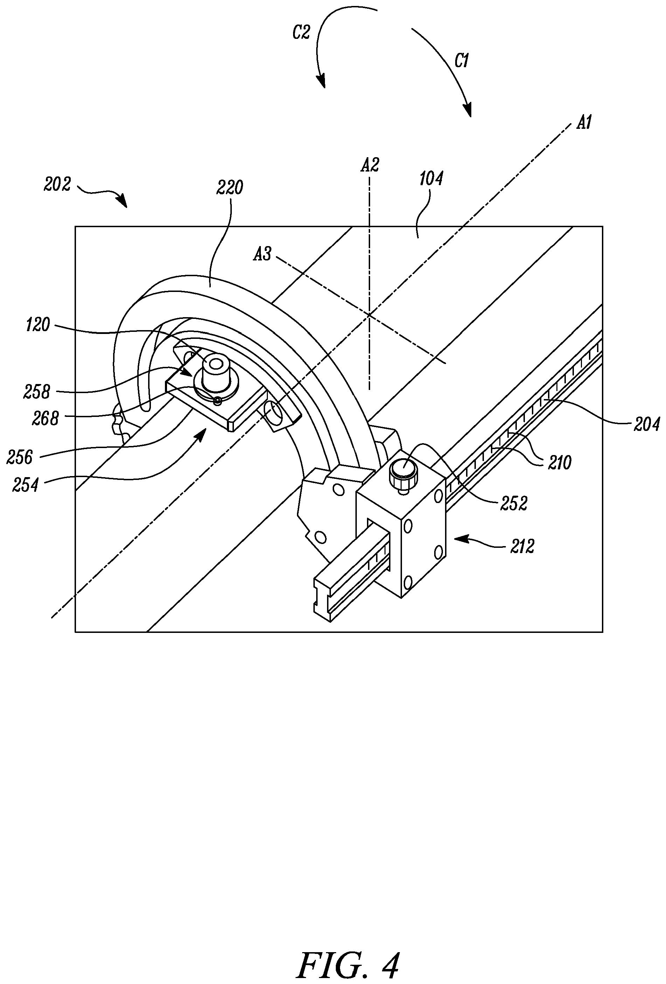

The machine 100 includes a frame 102. The frame 102 is formed from a number of tubular structures that are joined with each other. One such tubular structure 104 is illustrated in FIGS. 4, 5, and 7. Further, the frame 102 supports a pair of front wheels 106 and a pair of rear wheels 108 of the machine 100. The machine 100 further includes a dump body 110 that may hold the payload therein. The machine 100 also includes an enclosure 112 and an operator cabin 114 mounted to the frame 102. The enclosure 112 may house a power source (not shown). The power source may include, for example, a battery pack to provide power to various components of the machine 100 for operational and mobility requirements. The battery pack may include one or more battery modules, each of which may include battery cells, such as, lithium titanate battery cells. In other examples, the power source may include a fuel cell or an engine (for e.g., an internal combustion engine).

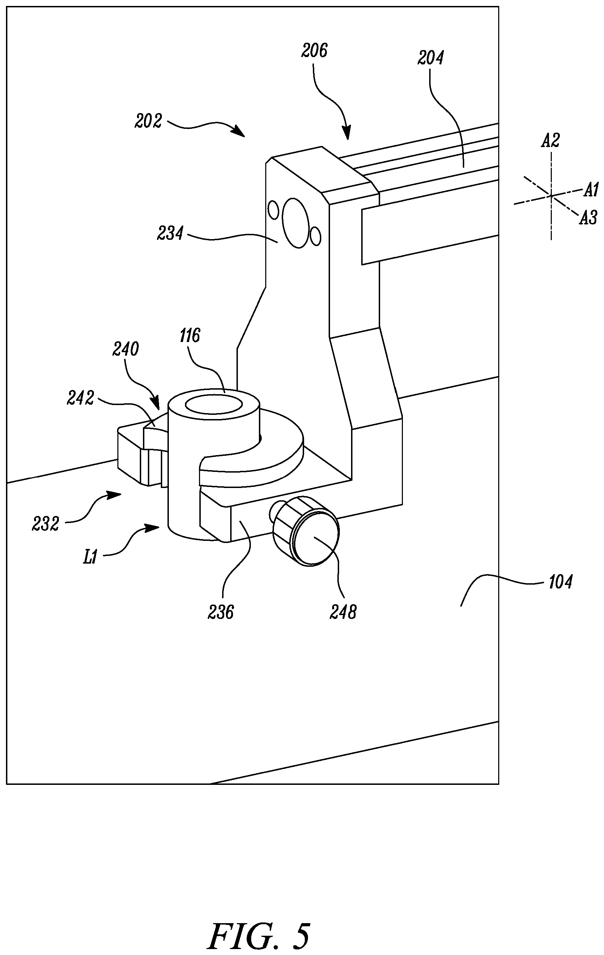

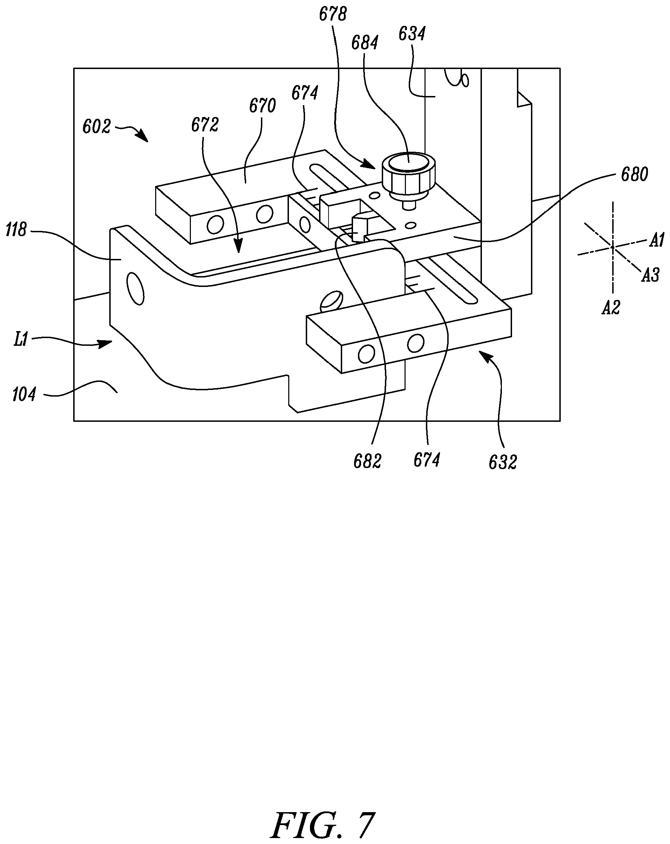

It should be noted that the frame 102 may support a number of machine parts, such as, components of the battery pack and/or a control unit thereon, without any limitations. In order to mount the machine parts on the tubular structure 104 of the frame 102, one or more hardware 116, 118 (shown in FIGS. 5 and 7, respectively) may have to be coupled to the tubular structure 104. The hardware 116 has a circular profile herein. Specifically, the hardware 116 includes a boss. Alternatively, the hardware 116 may include any other element having a circular profile, such as, a cylindrical member. Further, the hardware 118 has a non-circular profile herein. Specifically, the hardware 118 includes a bracket. Alternatively, the hardware 118 may include a plate or a block or any other element that may assist in mounting machine parts on the tubular structure 104. It should be noted that the present disclosure is not limited by a shape of the hardware 116, 118.

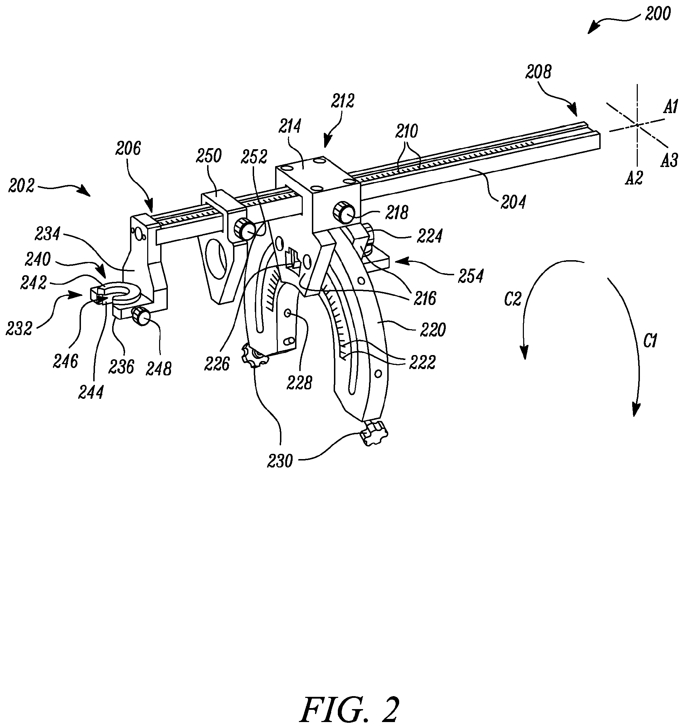

The present disclosure relates to a system 200 (shown inf FIG. 2) for locating the hardware 116, 118 at a desired location L1 (shown in FIGS. 5 and 7) on the tubular structure 104 of the machine 100. The system 200 includes a pre-existing hardware 120 (shown in FIG. 4) mounted on the tubular structure 104. The pre-existing hardware 120 is used as a reference to locate the hardware 116, 118 at the desired location L1 on the tubular structure 104. The pre-existing hardware 120 is embodied as a boss herein. However, it should be noted that the pre-existing hardware 120 may include any other element, without any limitations.

Referring to FIG. 2, the system 200 includes an apparatus 202 for locating the hardware 116 (see FIG. 4) at the desired location L1 (see FIG. 5) on the tubular structure 104 (see FIG. 5) of the machine 100. In an example, various components of the apparatus 202 may be made from a metallic material. However, it may be contemplated that the components of the apparatus 202 may be made from high strength polymers. The apparatus 202 includes a linear element 204 extending along a longitudinal axis A1, and defining a first end 206 and a second end 208. The linear element 204 includes a number of linear reference indicia 210 thereon. The linear element 204 is embodied as a rectangular bar herein.

Further, the apparatus 202 includes a slider 212 coupled to the linear element 204. The linear element 204 is linearly slidable relative to the slider 212 along the longitudinal axis A1 to dispose the slider 212 at any one of the number of linear reference indicia 210 based on the desired location L1 of the hardware 116. The slider 212 includes a rectangular block 214. The rectangular block 214 receives a portion of the linear element 204 therethrough. Further, the slider 212 includes a pair of coupling elements 216 extending from the rectangular block 214 along a vertical axis A2. In the illustrated example of FIG. 2, the rectangular block 214 is integral with each coupling element 216. Alternatively, the rectangular block 214 and the coupling elements 216 may be manufactured as separate components, and may be joined with each other to form the slider 212.

The slider 212 includes a first fastening member 218 that couples the slider 212 with the linear element 204. The first fastening member 218 is embodied as a clamp herein. In order to dispose the slider 212 at any one of the number of linear reference indicia 210, the first fastening member 218 may be loosened to facilitate movement of the linear element 204 relative to the slider 212. Further, the first fastening member 218 may be tightened to prevent any unintentional movement of the linear element 204 relative to the slider 212.

The apparatus 202 further includes an angular element 220. The angular element 220 is substantially semi-circular in shape. The angular element 220 can be coupled with and at least partially surround the tubular structure 104 (as shown in FIG. 4). An inner diameter defined by the angular element 220 may be slightly greater than an outer diameter of the tubular structure 104 so that the angular element 220 may surround the tubular structure 104 when the apparatus 202 is coupled with the tubular structure 104. The slider 212 is angularly slidable relative to the angular element 220. The angular element 220 includes a number of angular reference indicia 222 thereon. Further, the slider 212 is disposable at any one of the number of angular reference indicia 222 based on the desired location L1 of the hardware 116. It should be noted that the slider 212 may be moved along a clockwise direction C1 or an anti-clockwise direction C2 relative to the angular element 220 to dispose the slider 212 at any one of the number of angular reference indicia 222.

The slider 212 includes a second fastening member 224 that couples the slider 212 with the angular element 220. The second fastening member 224 is embodied as a clamp herein. In order to dispose the slider 212 at any one of the number of angular reference indicia 222, the second fastening member 224 may be loosened to facilitate movement of the linear element 204 relative to the angular element 220. Further, the second fastening member 224 may be tightened to prevent any unintentional movement of the slider 212 relative to the angular element 220. The slider 212 also includes a pointer 226. The slider 212 may be movable relative to the angular element 220, so that the pointer 226 may point at a particular angular reference indicia 222.

Further, the angular element 220 includes one or more magnets 228 and one or more third fastening members 230. The one or more magnets 228 and the one or more third fastening members 230 couple the angular element 220 with the tubular structure 104. The magnets 228 are circumferentially spaced apart from each other along the angular element 220. Only one magnet 228 is illustrated herein, however, the angular element 220 includes multiple magnets 228 that are obstructed from the view illustrated in FIG. 2. In some examples, a total number of the magnets 228 may be based on a dimension of the tubular structure 104 and a dimension of the angular element 220. Further, the angular element 220 includes two third fastening members 230 herein. The third fastening members 230 are embodied as clamps herein. The third fastening members 230 may be loosened to couple or remove the angular element 220 from the tubular structure 104. Further, the third fastening members 230 may be tightened to prevent any unintentional movement of the angular element 220 relative to the tubular structure 104.

The apparatus 202 includes a hardware locator 232 coupled to the linear element 204 at the first end 206 thereof. It should be noted that the hardware locator 232 is removably coupled with the linear element 204. The hardware locator 232 engages with the hardware 116 to locate the hardware 116 at the desired location L1 on the tubular structure 104. The hardware locator 232 includes an L-shaped design. The hardware locator 232 includes a first plate 234 coupled with the linear element 204. The first plate 234 is substantially orthogonal to the linear element 204. Specifically, the first plate 234 extends along the vertical axis A2. The hardware locator 232 also includes a second plate 236. The first and second plates 234, 236 are formed as an integral component herein. Further, the second plate 236 extends from the first plate 234 along the longitudinal axis A1. The second plate 236 defines a slot (not shown) that is substantially U-shaped.

Further, when the hardware 116 includes the circular profile, the hardware locator 232 includes a bush 240 to locate the hardware 116 at the desired location L1 on the tubular structure 104. The bush 240 engages with the hardware 116 for locating the hardware 116 on the tubular structure 104. It should be noted that the second plate 236 may be designed to hold bushes of different dimensions, based on a dimension of the hardware 116. The bush 240 includes a first portion 242 that rests on the second plate 236, and a second portion 244 extending from the first portion 242 that is received within the slot of the second plate 236. Further, the bush 240 also includes a slot 246 extending through the first and second portions 242, 244. The slot 246 is substantially U-shaped. The slot 246 is in alignment with the slot of the second plate 236. Further, the slot 246 receives the hardware 116 therein.

The hardware locator 232 further includes a pair of fourth fastening members 248. The fourth fastening members 248 are embodied as clamps herein. The fourth fastening members 248 facilitate coupling of the bush 240 with the second plate 236 of the hardware locator 232. The fourth fastening members 248 may be loosened to replace the bush 240 as per the dimension of the hardware 116. Further, the fourth fastening members 248 may be tightened to prevent any unintentional movement of the bush 240 relative to the second plate 236.

The apparatus 202 also includes a supporting block 250 slidably coupled to the linear element 204 and disposed between the slider 212 and the hardware locator 232. When the angular element 220 is coupled to the tubular structure 104, the supporting block 250 abuts with the tubular structure 104. The supporting block 250 may be disposed anywhere between the slider 212 and the hardware locator 232. The supporting block 250 includes a fifth fastening member 252 that couples the supporting block 250 with the linear element 204. The fifth fastening member 252 is embodied as a clamp herein. The fifth fastening member 252 may be loosened to facilitate movement of the supporting block 250 relative to the linear element 204. Further, the fifth fastening member 252 may be tightened to prevent any unintentional movement of the supporting block 250 relative to the linear element 204.

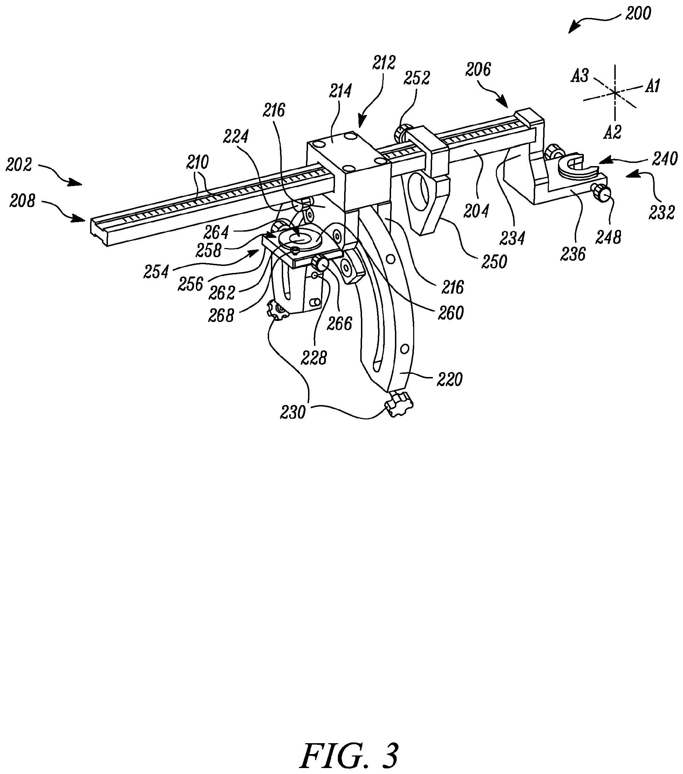

As shown in FIG. 3, the apparatus 202 includes a reference hardware locator 254 coupled to the angular element 220. The angular element 220 is coupled to the tubular structure 104 (see FIG. 4) such that the reference hardware locator 254 engages with the pre-existing hardware 120 mounted on the tubular structure 104. The reference hardware locator 254 extends from the angular element 220 along the longitudinal axis A1. The reference hardware locator 254 includes a plate 256 defining a circular through-hole (not shown). Further, the plate 256 is coupled with a reference bush 258 of the reference hardware locator 254. It should be noted that the plate 256 may be designed to hold bushes of different dimensions, based on a dimension of the pre-existing hardware 120. It should be noted that the reference bush 258 may be replaced by another reference element having a design and a dimension that may accommodate a design and the dimension of the pre-existing hardware 120. For example, if the pre-existing hardware 120 includes a plate, a block, or a bracket, the reference bush 258 may be replaced by an element that can engage with the said plate, block, or bracket.

The reference bush 258 includes a third portion 260 that rests on the plate 256 and a fourth portion 262 extending from the third portion 260 and received within the circular through-hole of the plate 256. Further, the reference bush 258 includes a through-opening 264 that is in alignment with the circular through-hole of the plate 256. Further, the through-opening 264 receives the hardware 116 (see FIG. 4) therein.

The reference hardware locator 254 includes a pair of sixth fastening members 266. The sixth fastening members 266 are embodied as clamps herein. The sixth fastening members 266 facilitate coupling of the reference bush 258 with the plate 256 of the reference hardware locator 254. The sixth fastening members 266 may be loosened to replace the reference bush 258 as per the dimension of the pre-existing hardware 120. Further, the sixth fastening members 266 may be tightened to prevent any unintentional movement of the reference bush 258 relative to the plate 256. Moreover, the reference hardware locator 254 includes a bush locator 268 that allows location of the reference bush 258 on the plate 256.

Referring to FIG. 4, when the hardware 116 is to be located on the tubular structure 104, the angular element 220 is coupled with the tubular structure 104 such that the pre-existing hardware 120 (see FIG. 3) is received within the through-opening 264 of the reference bush 258. It should be noted that the hardware 116 to be located on the tubular structure 104 may have a predetermined linear orientation and a predetermined angular orientation with respect to the pre-existing hardware 120. For example, the hardware 116 may have to be located at a predetermined linear distance and a predetermined angular distance from the pre-existing hardware 120. A user, such as an assembly personnel, may be aware of the values of the predetermined linear distance and the predetermined angular distance. In order to locate the hardware 116 at the predetermined angular orientation with respect to the pre-existing hardware 120, the user may move the slider 212 relative to the angular element 220 (in the clockwise direction C1 or the anti-clockwise direction C2) such that the slider 212 is disposed at a desired angular reference indicia 222 that corresponds to the predetermined angular distance. Further, in order to locate the hardware 116 at the predetermined linear orientation with respect to the pre-existing hardware 120, the user may move the linear element 204 relative to the slider 212 such that the linear element 204 is disposed at a desired linear reference indicia 210 that corresponds to the predetermined linear distance.

Referring now to FIG. 5, once the apparatus 202 is adjusted to the desired linear reference indicia 210 and the desired angular reference indicia 222, the hardware 116 may be engaged with the hardware locator 232. Subsequently, the hardware 116 may be tacked, welded, or bolted at the desired location L1, as per requirements.

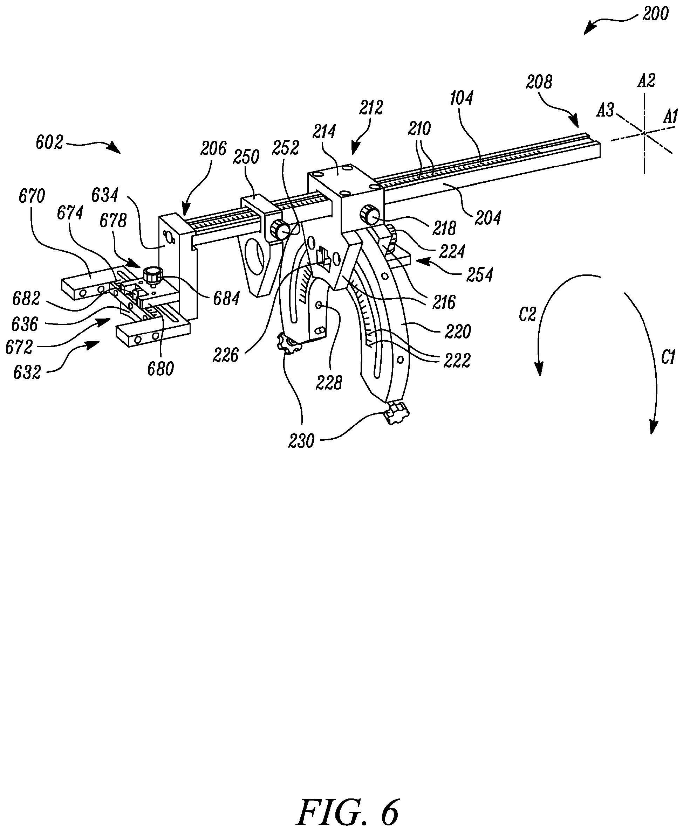

Referring now to FIGS. 6 and 7, a perspective view of an apparatus 602 for locating the hardware 118 at the desired location L1 on the tubular structure 104 of the machine 100 is illustrated. The apparatus 602 is substantially similar to the apparatus 202 described in relation to FIGS. 2 to 5, with common components being referred to by the same reference numerals. However, the apparatus 602 shown in FIG. 6 is used to locate the hardware 118 having a non-circular profile. Specifically, the apparatus 602 is used to locate the hardware 118 that is embodied as a bracket. Alternatively, the hardware 118 may include a plate, a block, or any other element having a non-circular profile.

As shown in FIG. 6, the apparatus 602 includes a hardware locator 632. The hardware locator 632 is removably coupled with the linear element 204. The hardware locator 632 includes a first plate 634 coupled with the linear element 204 and is substantially orthogonal to the linear element 204. Specifically, the first plate 634 extends along the vertical axis A2. The hardware locator 632 also includes a second plate 636. The first and second plates 634, 636 are formed as an integral component. Further, the second plate 636 extends from the first plate 634 along the longitudinal axis A1. When the hardware 118 includes the non-circular profile, the hardware locator 632 includes a locating bracket 670 to locate the hardware 118 at the desired location L1 (see FIG. 7) on the tubular structure 104 (see FIG. 7). The locating bracket 670 is slidable relative to the linear element 204 along a lateral axis A3 that is orthogonal to the longitudinal axis A1. Specifically, the locating bracket 670 slides relative to the second plate 636. The locating bracket 670 includes a slot 672, and a number of linear reference indicia 674 thereon. The slot 672 is substantially rectangular in shape and may accommodate at least a portion of the hardware 118 therein.

The hardware locator 632 also includes a coupling assembly 678 that couples the locating bracket 670 with the second plate 636. The coupling assembly 678 includes a coupling bracket 680 having a pointer 682. The locating bracket 670 may be movable relative to the second plate 636, so that the pointer 682 may point at a desired linear reference indicia 674 on the locating bracket 670. Further, the coupling assembly 678 includes a seventh fastening member 684. The seventh fastening member 684 is embodied as a clamp herein. The seventh fastening member 684 facilitates coupling of the locating bracket 670 with the second plate 636. The seventh fastening member 684 may be loosened to move the locating bracket 670 relative to the second plate 636. Further, the seventh fastening members 684 may be tightened to prevent any unintentional movement of the locating bracket 670 relative to the second plate 636.

When the hardware 118 is to be located at the desired location L1, the user may move the slider 212 relative to the angular element 220 (in the clockwise direction C1 or the anti-clockwise direction C2) such that the slider 212 is disposed at a desired angular reference indicia 222 that corresponds to a predetermined angular distance. Further, in order to locate the hardware 118 at a predetermined linear orientation with respect to the pre-existing hardware 120 along the longitudinal axis A1, the user may move the linear element 204 relative to the slider 212 such that the linear element 204 is disposed at a desired linear reference indicia 210 that corresponds to the predetermined linear distance. Moreover, in order to locate the hardware 118 at a predetermined linear orientation with respect to the pre-existing hardware 120 along the lateral axis A3, the user may move the locating bracket 670 relative to the second plate 636 such that the locating bracket 670 is disposed at a desired linear reference indicia 674.

Referring now to FIG. 7, once the apparatus 602 is adjusted to the desired linear reference indicia 210, 674 (along the longitudinal axis A1 and the lateral axis A3, respectively) and the desired angular reference indicia 222, the hardware 118 may be engaged with the hardware locator 632. Subsequently, the hardware 118 may be tacked, welded, or bolted at the desired location L1, as per requirements.

It is to be understood that individual features shown or described for one embodiment may be combined with individual features shown or described for another embodiment. The above described implementation does not in any way limit the scope of the present disclosure. Therefore, it is to be understood although some features are shown or described to illustrate the use of the present disclosure in the context of functional segments, such features may be omitted from the scope of the present disclosure without departing from the spirit of the present disclosure as defined in the appended claims.

### Industrial Applicability

The present disclosure relates to the apparatus 202, 602 for locating the hardware 116, 118. The apparatus 202, 602 may be particularly advantageous to locate the hardware 116, 118 on tubular shaped members, such as, the tubular structure 104.

The apparatus 202, 602 may be used to locate hardware having circular profiles, such as the hardware 116, and hardware having non-circular profiles, such as the hardware 118. More particularly, for locating the hardware 116, the hardware locator 232 may be coupled with the linear element 204. Further, for locating the hardware 118, the hardware locator 632 may be coupled with the linear element 204. Moreover, the linear element 204 may be interchangeably coupled with the hardware locator 232 or the hardware locator 632. Thus, the apparatus 202, 602 provides a modular solution that can be used to locate hardware having different designs and dimensions. Such a modular solution may reduce part numbers and costs associated with handling and manufacturing of multiple part numbers, thereby reducing an overall cost associated with locating the hardware 116, 118.

The hardware locators 232, 632 of the apparatus 202, 602, respectively, are designed to engage and hold the corresponding hardware 116, 118 in position while the hardware 116, 118 is being tacked and welded. The apparatus 202, 602 may allow locating of the hardware 116, 118 in a time-effective manner as the apparatus 202, 602 may be quickly set-up for locating the hardware 116, 118. Thus, during a replacement procedure, it may be possible to quickly replace the hardware 116, 118 without impacting machine productivity. The apparatus 202, 602 may be carried and used at remote locations, such as, a mining site. Further, the apparatus 202, 602 provides flexibility to change the location of the hardware 116, 118, for example, during design changes. Moreover, the apparatus 202, 602 may be light in weight as compared to conventional locating devices.

While aspects of the present disclosure have been particularly shown and described with reference to the embodiments above, it will be understood by those skilled in the art that various additional embodiments may be contemplated by the modification of the disclosed machine, systems and methods without departing from the scope of the appended claims. Such embodiments should be understood to fall within the scope of the present claims.

## Claims

1. An apparatus (202, 602) for locating a hardware (116, 118) at a desired location (L1) on a tubular structure (104) of a machine (100), the apparatus (202, 602) comprising:
a linear element (204) extending along a longitudinal axis (A1), and defining a first end (206) and a second end (208), wherein the linear element (204) includes a plurality of linear reference indicia (210) thereon;
a slider (212) coupled to the linear element (204), wherein the linear element (204) is linearly slidable relative to the slider (212) along the longitudinal axis (A1) to dispose the slider (212) at any one of the plurality of linear reference indicia (210) based on the desired location (L1) of the hardware (116, 118);
an angular element (220) adapted to be coupled with and at least partially surround the tubular structure (104), wherein the slider (212) is angularly slidable relative to the angular element (220), wherein the angular element (220) includes a plurality of angular reference indicia (222) thereon, and wherein the slider (212) is disposable at any one of the plurality of angular reference indicia (222) based on the desired location (L1) of the hardware (116, 118);
a hardware locator (232, 632) coupled to the linear element (204) at the first end (206) thereof, wherein the hardware locator (232, 632) is adapted to engage with the hardware (116, 118) to locate the hardware (116, 118) at the desired location (L1) on the tubular structure (104); and
a reference hardware locator (254) coupled to the angular element (220), wherein the angular element (220) is coupled to the tubular structure (104) such that the reference hardware locator (254) engages with a pre-existing hardware (120) mounted on the tubular structure (104), and wherein the pre-existing hardware (120) is adapted to be used as a reference to locate the hardware (116, 118) at the desired location (L1) on the tubular structure (104).

2. The apparatus (202, 602) of claim 1, wherein the apparatus (202, 602) includes a supporting block (250) slidably coupled to the linear element (204) and disposed between the slider (212) and the hardware locator (232, 632), and wherein, when the angular element (220) is coupled to the tubular structure (104), the supporting block (250) abuts with the tubular structure (104).

3. The apparatus (202, 602) of claim 1, wherein the slider (212) includes a first fastening member (218) that couples the slider (212) with the linear element (204) and a second fastening member (224) that couples the slider (212) with the angular element (220).

4. The apparatus (202, 602) of claim 1, wherein the angular element (220) includes at least one magnet (228) and at least one third fastening member (230), and wherein the at least one magnet (228) and the at least one third fastening member (230) couple the angular element (220) with the tubular structure (104).

5. The apparatus (202) of claim 1, wherein, when the hardware (116) includes a circular profile, the hardware locator (232) includes a bush (240) to locate the hardware (116) at the desired location (L1) on the tubular structure (104).

6. The apparatus (602) of claim 1, wherein, when the hardware (118) includes a non-circular profile, the hardware locator (632) includes a locating bracket (670) to locate the hardware (118) at the desired location (L1) on the tubular structure (104), wherein the locating bracket (670) is slidable relative to the linear element (204) along a lateral axis (A3) that is orthogonal to the longitudinal axis (A1), and wherein the locating bracket (670) includes a slot (672), and a plurality of linear reference indicia (674) thereon.

7. A system (200) for locating a hardware (116, 118) at a desired location (L1) on a tubular structure (104) of a machine (100), the system (200) comprising:
a pre-existing hardware (120) mounted on the tubular structure (104), wherein the pre-existing hardware (120) is adapted to be used as a reference to locate the hardware (116, 118) at the desired location (L1) on the tubular structure (104); and
an apparatus (202, 602) adapted to locate the hardware (116, 118) at the desired location (L1) on the tubular structure (104) using the pre-existing hardware (120) as the reference, the apparatus (202, 602) being the apparatus of any of claims 1, 2, 5 and 6.

## Patentansprüche

1. Vorrichtung (202, 602) zum Positionieren einer Hardware (116, 118) an einer gewünschten Position (L1) auf einer rohrförmigen Struktur (104) einer Maschine (100), die Vorrichtung (202, 602) umfassend:
ein lineares Element (204), das sich entlang einer Längsachse (A1) erstreckt und ein erstes Ende (206) und ein zweites Ende (208) definiert, wobei das lineare Element (204) eine Vielzahl von linearen Referenzmarkierungen (210) darauf einschließt;
einen Schieber (212), der mit dem linearen Element (204) gekoppelt ist, wobei das lineare Element (204) relativ zu dem Schieber (212) entlang der Längsachse (A1) linear verschiebbar ist, um den Schieber (212) an einer beliebigen einen der Vielzahl von linearen Referenzmarkierungen (210) basierend auf der gewünschten Position (L1) der Hardware (116, 118) anzuordnen;
ein Winkelelement (220), das angepasst ist, um mit der rohrförmigen Struktur (104) gekoppelt zu sein und diese mindestens teilweise zu umgeben, wobei der Schieber (212) relativ zu dem Winkelelement (220) winkelig verschiebbar ist, wobei das Winkelelement (220) eine Vielzahl von Winkelreferenzmarkierungen (222) darauf einschließt, und wobei der Schieber (212) an einer beliebigen einen der Vielzahl von Winkelreferenzmarkierungen (222) basierend auf der gewünschten Position (L1) der Hardware (116, 118) angeordnet werden kann;
einen Hardwarepositionierer (232, 632), der an das lineare Element (204) an dem ersten Ende (206) davon gekoppelt ist, wobei der Hardwarepositionierer (232, 632) angepasst ist, um mit der Hardware (116, 118) in Eingriff zu treten, um die Hardware (116, 118) an der gewünschten Position (L1) auf der rohrförmigen Struktur (104) zu positionieren; und
einen Referenzhardwarepositionierer (254), der an das Winkelelement (220) gekoppelt ist, wobei das Winkelelement (220) derart an die rohrförmige Struktur (104) gekoppelt ist, dass der Referenzhardwarepositionierer (254) mit einer bereits vorhandenen Hardware (120) in Eingriff steht, die auf der rohrförmigen Struktur (104) montiert ist, und wobei die bereits vorhandene Hardware (120) angepasst ist, um als eine Referenz verwendet zu werden, um die Hardware (116, 118) an der gewünschten Position (L1) auf der rohrförmigen Struktur (104) zu positionieren.

2. Vorrichtung (202, 602) nach Anspruch 1, wobei die Vorrichtung (202, 602) einen Stützblock (250) einschließt, der an das lineare Element (204) gleitend gekoppelt und zwischen dem Schieber (212) und dem Hardwarepositionierer (232, 632) angeordnet ist, und wobei, wenn das Winkelelement (220) an die rohrförmige Struktur (104) gekoppelt ist, der Stützblock (250) an die rohrförmige Struktur (104) anstößt.

3. Vorrichtung (202, 602) nach Anspruch 1, wobei der Schieber (212) ein erstes Befestigungselement (218), das den Schieber (212) mit dem linearen Element (204) koppelt, und ein zweites Befestigungselement (224) einschließt, das den Schieber (212) mit dem Winkelelement (220) koppelt.

4. Vorrichtung (202, 602) nach Anspruch 1, wobei das Winkelelement (220) mindestens einen Magnet (228) und mindestens ein drittes Befestigungselement (230) einschließt, und wobei der mindestens eine Magnet (228) und das mindestens eine dritte Befestigungselement (230) das Winkelelement (220) mit der rohrförmigen Struktur (104) koppeln.

5. Vorrichtung (202) nach Anspruch 1, wobei, wenn die Hardware (116) ein kreisförmiges Profil einschließt, der Hardwarepositionierer (232) eine Buchse (240) einschließt, um die Hardware (116) an der gewünschten Position (L1) auf der rohrförmigen Struktur (104) zu positionieren.

6. Vorrichtung (602) nach Anspruch 1, wobei, wenn die Hardware (118) ein nicht kreisförmiges Profil einschließt, der Hardwarepositionierer (632) eine Positionierungshalterung (670) einschließt, um die Hardware (118) an der gewünschten Position (L1) auf der rohrförmigen Struktur (104) zu positionieren, wobei die Positionierungshalterung (670) relativ zu dem linearen Element (204) entlang einer lateralen Achse (A3) verschiebbar ist, die orthogonal zu der Längsachse (A1) ist, und wobei die Positionierungshalterung (670) einen Schlitz (672) und eine Vielzahl von linearen Referenzmarkierungen (674) darauf einschließt.

7. System (200) zum Positionieren einer Hardware (116, 118) an einer gewünschten Position (L1) auf einer rohrförmigen Struktur (104) einer Maschine (100), das System (200) umfassend:
eine bereits vorhandene Hardware (120), die auf der rohrförmigen Struktur (104) montiert ist, wobei die bereits vorhandene Hardware (120) angepasst ist, um als eine Referenz verwendet zu werden, um die Hardware (116, 118) an der gewünschten Position (L1) auf der rohrförmigen Struktur (104) zu positionieren; und
eine Vorrichtung (202, 602), die angepasst ist, um die Hardware (116, 118) an der gewünschten Position (L1) auf der rohrförmigen Struktur (104) unter Verwendung der bereits vorhandenen Hardware (120) als die Referenz zu positionieren, wobei die Vorrichtung (202, 602) die Vorrichtung nach einem der Ansprüche 1, 2, 5 und 6 ist.

## Revendications

1. Appareil (202, 602) permettant de localiser un matériel (116, 118) à un emplacement souhaité (L1) sur une structure tubulaire (104) d'une machine (100), l'appareil (202, 602) comprenant :
un élément linéaire (204) s'étendant le long d'un axe longitudinal (A1), et définissant une première extrémité (206) et une seconde extrémité (208), dans lequel l'élément linéaire (204) comporte une pluralité d'indications de référence linéaire (210) sur celui-ci ;
un coulisseau (212) accouplé à l'élément linéaire (204), dans lequel l'élément linéaire (204) peut coulisser linéairement par rapport au coulisseau (212) le long de l'axe longitudinal (A1) pour disposer le coulisseau (212) au niveau de l'une quelconque de la pluralité d'indications de référence linéaire (210) en fonction de l'emplacement souhaité (L1) du matériel (116, 118) ;
un élément angulaire (220) adapté pour être accouplé à la structure tubulaire (104) et l'entourer au moins partiellement, dans lequel le coulisseau (212) peut coulisser angulairement par rapport à l'élément angulaire (220), dans lequel l'élément angulaire (220) comporte une pluralité d'indications de référence angulaire (222) sur celui-ci, et dans lequel le coulisseau (212) peut être disposé au niveau de l'une quelconque de la pluralité d'indications de référence angulaire (222) en fonction de l'emplacement souhaité (L1) du matériel (116, 118) ;
un localisateur de matériel (232, 632) accouplé à l'élément linéaire (204) au niveau de la première extrémité (206) de celui-ci, dans lequel le localisateur de matériel (232, 632) est adapté pour venir en prise avec le matériel (116, 118) afin de localiser le matériel (116, 118) au niveau de l'emplacement souhaité (L1) sur la structure tubulaire (104) ; et
un localisateur de matériel de référence (254) accouplé à l'élément angulaire (220), dans lequel l'élément angulaire (220) est accouplé à la structure tubulaire (104) de telle sorte que le localisateur de matériel de référence (254) vient en prise avec un matériel préexistant (120) monté sur la structure tubulaire (104), et dans lequel le matériel préexistant (120) est adapté pour être utilisé comme référence pour localiser le matériel (116, 118) au niveau de l'emplacement souhaité (L1) sur la structure tubulaire (104).

2. Appareil (202, 602) selon la revendication 1, dans lequel l'appareil (202, 602) comporte un bloc de support (250) accouplé de manière coulissante à l'élément linéaire (204) et disposé entre le coulisseau (212) et le localisateur de matériel (232, 632), et dans lequel, lorsque l'élément angulaire (220) est accouplé à la structure tubulaire (104), le bloc de support (250) vient en butée contre la structure tubulaire (104).

3. Appareil (202, 602) selon la revendication 1, dans lequel le coulisseau (212) comporte un premier élément de fixation (218) qui accouple le coulisseau (212) avec l'élément linéaire (204) et un deuxième élément de fixation (224) qui accouple le coulisseau (212) avec l'élément angulaire (220).

4. Appareil (202, 602) selon la revendication 1, dans lequel l'élément angulaire (220) comporte au moins un aimant (228) et au moins un troisième élément de fixation (230), et dans lequel l'au moins un aimant (228) et l'au moins un troisième élément de fixation (230) accouplent l'élément angulaire (220) à la structure tubulaire (104).

5. Appareil (202) selon la revendication 1, dans lequel, lorsque le matériel (116) comporte un profil circulaire, le localisateur de matériel (232) comporte une douille (240) pour localiser le matériel (116) au niveau de l'emplacement souhaité (L1) sur la structure tubulaire (104).

6. Appareil (602) selon la revendication 1, dans lequel, lorsque le matériel (118) comporte un profil non circulaire, le localisateur de matériel (632) comporte un support de positionnement (670) pour localiser le matériel (118) au niveau de l'emplacement souhaité (L1) sur la structure tubulaire (104), dans lequel le support de positionnement (670) peut coulisser par rapport à l'élément linéaire (204) le long d'un axe latéral (A3) qui est orthogonal à l'axe longitudinal (A1), et dans lequel le support de positionnement (670) comporte une fente (672) et une pluralité d'indications de référence linéaire (674) sur celle-ci.

7. Système (200) permettant de localiser un matériel (116, 118) au niveau d'un emplacement souhaité (L1) sur une structure tubulaire (104) d'une machine (100), le système (200) comprenant :
un matériel préexistant (120) monté sur la structure tubulaire (104), dans lequel le matériel préexistant (120) est adapté pour être utilisé comme référence pour localiser le matériel (116, 118) au niveau de l'emplacement souhaité (L1) sur la structure tubulaire (104) ; et
un appareil (202, 602) adapté pour localiser le matériel (116, 118) au niveau de l'emplacement souhaité (L1) sur la structure tubulaire (104) à l'aide du matériel préexistant (120) comme référence, l'appareil (202, 602) étant l'appareil selon l'une quelconque des revendications 1, 2, 5 et 6.
